# EUROPEAN PATENT APPLICATION

(11) **EP 3 109 109 A1**
(43) Date of publication of application: **28.12.2016**
(21) Application number: 15773768.5
(22) Date of filing: 31.03.2015
(51) Int. Cl.: B60T 13/74, B60T 7/10, F16D 65/18

(54) **DRIVING UNIT FOR ELECTRONIC PARKING BRAKE**

(30) Priority: 31.03.2014 KR 20140038058
(71) Applicant: erae Automotive Systems Co., Ltd., Dalseong-gun Daegu 42981 (KR)
(72) Inventor: KIM, Tae-Sung, Dalseong-gun Daegu 711-712 (KR); CHOI, Hong-Seok, Daegu 711-712 (KR); HWANG, Se-Joon, Dalseong-gun Daegu 711-712 (KR)
(74) Representative: Manitz, Finsterwald & Partner GbR
(86) International application number: PCT/KR2015/003135
(87) International publication number: WO 2015/152591

(57) **Abstract**

A driving unit for an electronic parking brake which drives a brake cable of the electronic parking brake includes: a motor; a final gear; a gear box assembly which transmits power output from the motor to the final gear; a first power transmitting member which is connected to the final gear so as to rotate together with the final gear and to be movable in an axial direction relative to the final gear; and a second power transmitting member which is connected to the first power transmitting unit so as to move in the axial direction in response to a rotation of the first power transmitting member.

## Description

### [Technical Field]

The present invention relates to a driving unit for an electronic parking brake for providing power to apply or release an electronic parking brake.

### [Background Art]

A driving unit for driving a brake cable of an electronic parking brake using a motor, a gear and a spindle shaft.

A conventional driving unit for an electronic parking brake has a problem in that a power transmission mechanism is so complicate that a mounting structure for a sensor for detecting a braking force is also complicate.

### [Detailed Description of the Invention]

### [Technical Problem]

The present invention has been made in an effort to provide a driving unit for an electronic parking brake which has a simple power transmission mechanism and in which a sensor for detecting a brake force can be mounted by a simple structure.

### [Technical Solution]

A driving unit for an electronic parking brake which drives a brake cable of the electronic parking brake according to an embodiment of the present invention includes: a motor; a final gear; a gear box assembly which transmits power output from the motor to the final gear; a first power transmitting member which is connected to the final gear so as to rotate together with the final gear and to be movable in an axial direction relative to the final gear; and a second power transmitting member which is connected to the first power transmitting unit so as to move in the axial direction in response to a rotation of the first power transmitting member.

The first power transmitting member may be inserted into a through hole of the final gear. A groove may be formed along an axial direction on a surface defining the through hole, and a coupling protrusion which is inserted into the groove may be formed on an outer circumferential surface of the first power transmitting member.

A tool connection portion which is formed to be connected to a tool from an outside to forcibly rotate the first power transmitting member may be formed to the first power transmitting member.

The driving unit for an electronic parking brake according to another embodiment of the present invention may further include: a first supporting member which is connected to the first power transmitting member so as to move together with the first power transmitting member in the axial direction; a second supporting member which is fixed at a predetermined position to face the first supporting member; an elastic member which is elastically interposed between the first supporting member and the second supporting member; and a sensor module which senses a position in an axial direction of the first supporting member.

The first supporting member may be connected to the first power transmitting member so as not to rotate together with the first power transmitting member when the first power transmitting member rotates.

The sensor module may include: a magnet which is mounted to the first supporting member; and a sensor which is operated by a magnetic force of the magnet.

The driving unit for an electronic parking brake according to yet another embodiment of the present invention may include a case which houses the final gear, the first power transmitting member, the first supporting member and the second supporting member. The case may have a cover which covers upper portions of the final gear and the first supporting member, and the sensor may be inserted into an opening which is formed in the cover.

The gear box assembly may include a gear box housing, and the gear box housing may have an opening which is formed at a side toward the final gear.

A driving unit for an electronic parking brake which drives a brake cable of the electronic parking brake according to yet another embodiment of the present invention comprises: a motor; a final gear; a gear box assembly which transmits power output from the motor to the final gear; a first power transmitting member which rotates together with the final gear; a second power transmitting member which is connected to the first power transmitting unit so as to move in the axial direction in response to a rotation of the first power transmitting member; a first supporting member which is connected to the first power transmitting member so as to move together with the first power transmitting member in the axial direction; a second supporting member which is fixed at a predetermined position to face the first supporting member; an elastic member which is elastically interposed between the first supporting member and the second supporting member; and a sensor module which senses a position in an axial direction of the first supporting member.

### [Advantageous Effects]

According to the present invention, a power transmission is simple and a sensor for detecting a braking force can be mounted by a simple structure.

### [Brief Description of the Drawings]

FIG. 1 is a schematic perspective view of a driving unit for an electronic parking brake according to an embodiment of the present invention.
FIG. 2 and FIG. 3 are perspective views of a driving unit for an electronic parking brake according to an embodiment of the present invention in which some parts are omitted for explaining the structure thereof.
FIG. 4 is an exploded perspective view for explaining a connection between a final gear and a first power transmitting member of a driving unit for an electronic parking brake according to an embodiment of the present invention.
FIG. 5 is a drawing for explaining an arrangement of a magnet and a sensor of a driving unit for an electronic parking brake according to an embodiment of the present invention.
FIG. 6 is a drawing for showing a case of a driving unit for an electronic parking brake according to an embodiment of the present invention.

### [Detailed Description of the Embodiments]

An embodiment of the present invention will be explained hereinafter with reference to the accompanying drawings.

A driving unit for an electronic parking brake according to an embodiment of the present invention is a device for applying or releasing an electronic parking brake of a vehicle.

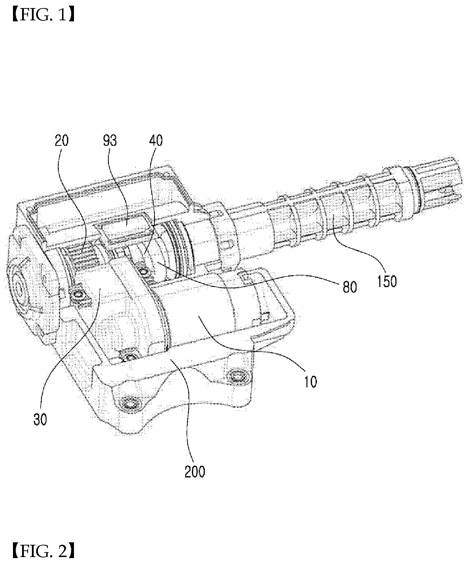

Referring to FIG. 1, a driving unit for an electronic parking brake includes a motor 10. The motor 10 may be operated by a control signal for applying or releasing an electronic parking brake, and such a control signal may be generated by a controller in response to a driver's operation of a parking brake switch.

An output power of the motor 10 is finally transmitted to a brake cable 100. Accordingly, the brake cable 100 is pulled or pushed by the power of the motor 10. At this time, the brake cable 100 is connected to an operation element of a parking brake, and the operation element of a parking brake is triggered by the movement of the brake cable 100 so that the parking brake may be applied or released.

A rotating power output from the motor 10 is transmitted to a final gear 20 via a gear box assembly 30. The gear box assembly 30 may include at least one gear which connects an output shaft of the motor 10 and the final gear 20. As shown in the drawings, the gear box assembly 30 may include a gear box housing 31 and at least one gear may be disposed in the gear box housing 31. The gear box housing includes an opening which is formed at a side facing the final gear 20.

A first power transmitting member 40 is connected to the final gear 20. The first power transmitting member 40 may have a shape of a shaft as shown in the drawings.

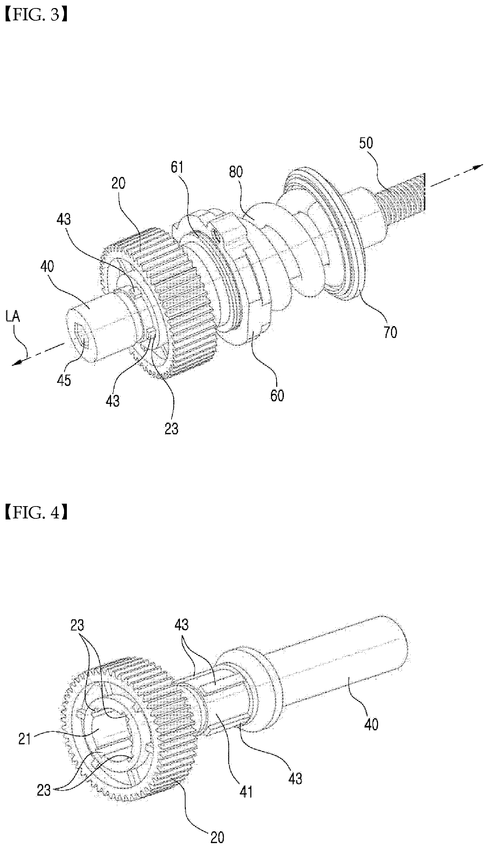

The first power transmitting member 40 is connected to the final gear 20 so as to rotate together with the final gear 20 and to be movable in an axial direction relative to the final gear 20. In detail, in case that the final gear 20 rotates, the first power transmitting member 40 rotates together with the same. That is, when the final gear 20 rotates by the power of the motor 10, the first power transmitting member 40 rotates together with the final gear 20. Meanwhile, referring to FIG. 3, the first power transmitting member 40 can be movable in an axial direction LA relative to the final gear 20. That is, the final gear 20 is mounted so as not to be movable in an axial direction, and the first power transmitting gear 40 may be movable relative to the final gear 20 which is fixed in an axial direction.

In detail, referring to FIG. 3 and FIG. 4, a through hole 21 is formed along an axial direction in the final gear 20, and the first power transmitting member 40 is inserted into the through hole 21. A coupling protrusion 43 is provided along an axial direction on an outer circumferential surface 41 of the first power transmitting member 40, and a groove 23 corresponding to the coupling protrusion 43 is formed on a surface defining the through hole 21 of the final gear 20. The first power transmitting member 40 and the final gear 20 are connected to one another in a state that the coupling protrusion 43 of the first power transmitting member 40 is inserted into the groove 23 of the final gear 20. Accordingly, the first power transmitting member 40 rotates together with the final gear 20 when the final gear 20 rotates, and the first power transmitting member 40 can be movable in an axial direction relative to the final gear 20. At this time, the coupling protrusion 43 and the groove 23 may be respectively provided in a plurality, and the plural coupling protrusion 43 and the plural grooves 23 may be arranged with a constant internal in a circumferential direction.

A second power transmitting member 50 is connected to the brake cable 100. The second power transmitting member 50 is connected to the first power transmitting member 40, and the second power transmitting member 50 moves in an axial direction in response to the rotation of the first power transmitting member 40. Accordingly, when the first power transmitting member 40 rotates together with the final gear 20, the second power transmitting member 50 moves in an axial direction in response to the rotation of the first power transmitting member 40, and thereby the brake cable 100 moves so that the parking brake is applied or released. At this time, as shown in FIG. 1, the second power transmitting member 50 may be disposed within a housing 150.

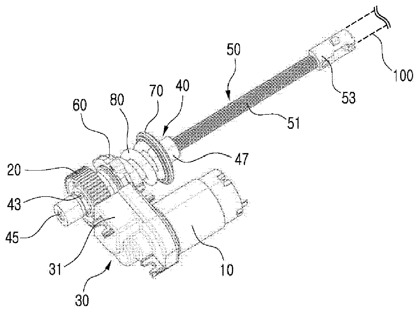

Such a connection between the first and the second power transmitting members 40 and 50 may be realized by a thread coupling. For example, one end 47 of the first power transmitting member 40 has a hollow structure in which an axial through hole is formed therein and a thread is formed on an inner surface thereof, and the second power transmitting member 50 may have a thread 51 which are threaded with the thread of the first power transmitting member 40 in a type of a spindle shaft. The second power transmitting member 50 is inserted into the axial through hole of the first power transmitting member 40 in a state that the thread 51 is threaded with the thread of the first power transmitting member 40. In addition, a coupling part 53 to which the brake cable 100 is connected may be provided at one end of the second power transmitting member 50, and the second power transmitting member 50 is mounted so as to be movable in an axial direction but not to be rotatable. By these structure and connection, if the first power transmitting member 40 rotates, the second power transmitting member 50 moves in an axial direction (directions of arrows shown in FIG. 2).

At this time, a tool connection portion 45, which is provided to be connected by a tool from an outside so as to forcibly rotate the first power transmitting member 40, is formed in the first power transmitting member 40. For example, as shown in FIG. 2 and FIG. 3, the tool connection portion 45 may be formed at one end, i.e., at an end opposite to an end to which the second power transmitting member is connected. The tool connection portion 45 may be an indentation as shown in the drawings, and may also be a protrusion in another embodiment. At this time, the indentation or the protrusion may have a polygonal shape. By rotating a tool which is coupled to the tool connection portion 45, the first power transmitting member 40 may be forcibly rotated. Thus, by rotating the first power transmitting member 40, the parking brake may be released from the applied state.

Referring to FIG. 2 and FIG. 3, a first supporting member 60 is connected to the first power transmitting member 40 so as to move together with the first power transmitting member 40 in the axial direction. Further, a second supporting member 70 is fixed to a predetermined position to face the first supporting member 60. That is, the first supporting member 60 moves in the axial direction together with the first power transmitting member 40, and the second supporting member 70 is fixed at the predetermined position regardless of the movement of the first power transmitting member 40. For example, the second supporting member 70 may be fixed to a case 200. At this time, as shown in the drawing, the first supporting member 60 and the second supporting member 70 may respectively have a ring shape, and the first power transmitting member 40 is disposed to pass through center portions thereof.

An elastic member 80 is elastically interposed between the first supporting member 60 and the second supporting member 70. For example, the elastic member 80 may be a coil spring, and both ends of the coil spring are respectively supported against the first and the second supporting members 60 and 70.

A sensor module 90 senses a position in the axial direction of the first supporting member 60. Information such as the appliance or the release of the parking brake and a braking force may be obtained based on the axial position of the first supporting member 60.

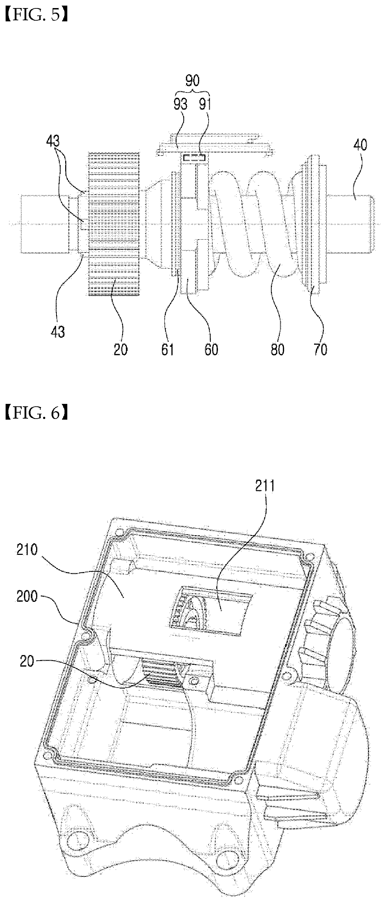

In more detail, the sensor module 90 may include a magnet 91 which is mounted to the first supporting member 60 and a sensor 93 which is operated by a magnetic force of the magnet 91. Referring to FIG. 5, the magnet 91 may be embedded into the first supporting member 60 and may also be fixed on a surface of the first supporting member 60. The sensor 93 may be a force sensor, a hall IC or the like.

Meanwhile, the first supporting member 60 may be connected to the first power transmitting member 40 so as not to rotate together with the first power transmitting member 40 when the first power transmitting 40 rotates. Accordingly, the magnet 91 which is mounted to the first supporting member 60 may move in a linear line so that a sensing can be stably performed. For this connection, in order to ensure the first power transmitting member 40 which is inserted into the first supporting member 60 to smoothly rotate, the first supporting member 60 may be connected to the first power transmitting member 40 via a washer (or bearing) 61.

Meanwhile, referring to FIG. 1, the motor 10, the gear box assembly 30, the final gear 20, the first power transmitting member 40, the first and the second supporting members 60 and 70, and the elastic member 80 may be housed in the case 200.

Further, referring to FIG. 6, the case may include a cover 210 which covers the final gear 20 and the first supporting member 60, and the cover 210 may include an opening 211 for mounting the sensor 93. The sensor 93 may be inserted into the opening 211 of the cover 210. Since the sensor 93 is mounted in this way, the mounting structure is simple.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

### [Industrial Applicability]

The present invention relates to a driving unit of an electronic parking brake and can be applied to an electronic parking brake of a vehicle, so the present invention has an industrial applicability.

## Claims

1. A driving unit for an electronic parking brake which drives a brake cable of the electronic parking brake comprising:
a motor;
a final gear;
a gear box assembly which transmits power output from the motor to the final gear;
a first power transmitting member which is connected to the final gear so as to rotate together with the final gear and to be movable in an axial direction relative to the final gear; and
a second power transmitting member which is connected to the first power transmitting unit so as to move in the axial direction in response to a rotation of the first power transmitting member.

2. The driving unit for an electronic parking brake of claim 1, wherein the first power transmitting member is inserted into a through hole of the final gear, wherein a groove is formed along an axial direction on a surface defining the through hole, and wherein a coupling protrusion which is inserted into the groove is formed on an outer circumferential surface of the first power transmitting member.

3. The driving unit for an electronic parking brake of claim 1, wherein a tool connection portion which is formed to be connected to a tool from an outside to forcibly rotate the first power transmitting member is formed to the first power transmitting member.

4. The driving unit for an electronic parking brake of claim 1, further comprising:
a first supporting member which is connected to the first power transmitting member so as to move together with the first power transmitting member in the axial direction;
a second supporting member which is fixed at a predetermined position to face the first supporting member;
an elastic member which is elastically interposed between the first supporting member and the second supporting member; and
a sensor module which senses a position in an axial direction of the first supporting member.

5. The driving unit for an electronic parking brake of claim 4, wherein the first supporting member is connected to the first power transmitting member so as not to rotate together with the first power transmitting member when the first power transmitting member rotates.

6. The driving unit for an electronic parking brake of claim 4, wherein the sensor module comprises:
a magnet which is mounted to the first supporting member; and
a sensor which is operated by a magnetic force of the magnet.

7. The driving unit for an electronic parking brake of claim 6, further comprising a case which houses the final gear, the first power transmitting member, the first supporting member and the second supporting member, wherein the case has a cover which covers upper portions of the final gear and the first supporting member, and wherein the sensor is inserted into an opening which is formed in the cover.

8. The driving unit for an electronic parking brake of claim 1, wherein the gear box assembly comprises a gear box housing, and wherein the gear box housing has an opening which is formed at a side toward the final gear.

9. A driving unit for an electronic parking brake which drives a brake cable of the electronic parking brake comprising:
a motor;
a final gear;
a gear box assembly which transmits power output from the motor to the final gear;
a first power transmitting member which rotates together with the final gear;
a second power transmitting member which is connected to the first power transmitting unit so as to move in the axial direction in response to a rotation of the first power transmitting member;
a first supporting member which is connected to the first power transmitting member so as to move together with the first power transmitting member in the axial direction;
a second supporting member which is fixed at a predetermined position to face the first supporting member;
an elastic member which is elastically interposed between the first supporting member and the second supporting member; and
a sensor module which senses a position in an axial direction of the first supporting member.
